(19) Europäisches Patentamt / European Patent Office / Office européen des brevets

(11) **EP 3 424 680 A1**

(12) **EUROPEAN PATENT APPLICATION**
published in accordance with Art. 153(4) EPC

(43) Date of publication:
**09.01.2019 Bulletin 2019/02**

(51) Int Cl.:
**B29C 47/88** (2006.01)     **B29B 13/04** (2006.01)
**B29C 64/314** (2017.01)    **B33Y 70/00** (2015.01)
B29B 7/82 (2006.01)          B29B 9/06 (2006.01)

(21) Application number: **16892731.7**

(22) Date of filing: **12.12.2016**

(86) International application number:
**PCT/JP2016/086955**

(87) International publication number:
**WO 2017/149896 (08.09.2017 Gazette 2017/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.02.2016 JP 2016038233**

(71) Applicant: **Ricoh Company Ltd.**
**Ohta-ku**
**Tokyo 143-8555 (JP)**

(72) Inventor: **MIYAKE, Hirokazu**
**Tokyo 143-8555 (JP)**

(74) Representative: **Lamb, Martin John Carstairs**
**Marks & Clerk LLP**
**90 Long Acre**
**London WC2E 9RA (GB)**

(54) **STRAND MANUFACTURING APPARATUS AND STRAND MANUFACTURING METHOD**

(57)     Provided is a strand producing apparatus including: an extrusion-molding unit configured to melt and knead a resin composition and extrusion-mold the resin composition into a strand shape; and a cooling/solidifying unit configured to cool and solidify the extrusion-molded resin composition having the strand shape, wherein the cooling/solidifying unit is a roll unit that includes a groove having a curvature and internally includes a coolant flow path, and wherein both of a coolant inlet and a coolant outlet of the coolant flow path are provided at the same end side of the roll unit.

## FIG. 1

EP 3 424 680 A1

**Description**

Technical Field

The present invention relates to a strand producing apparatus and a method for producing a strand.

Background Art

In recent years, fused deposition molding (FDM) methods have been known as techniques for mold-free production of three-dimensional stereoscopic objects. In the fused deposition molding methods, in the case of melting a fibrous-shaped resin (strand) for producing a three-dimensional object and laminating layers of the resin in an overhang shape that is at greater than 45 degrees from a vertical line, there may occur, for example, so-called "drooping", which is deformation or fluidization of the melted resin in the gravity direction, to make the shape unstable. Therefore, a support is formed with a strand formed of a water-soluble resin in order to stabilize the shape of the melded resin. After a three-dimensional object is formed, in order to remove the support, there has been made an attempt to immerse the three-dimensional object in water together with the support, to dissolve the support.

The strand for the support can be obtained by extruding a thermoplastic resin from, for example, an extruder to mold the resin into a fibrous shape. The strand immediately after extrusion is in a softened state, and needs rapid cooling and solidifying in order to maintain the dimensional accuracy.

For example, there has been proposed a method of flowing a coolant into a guide roll to prevent temperature rising in the guide roll (for example, see Patent document 1).

Citation List

Patent Document

Patent document 1: Japanese Unexamined Patent Application Publication No. 11-129245

Summary of Invention

Technical Problem

The strand has a greater deadweight as the strand has a larger diameter. Hence, problems do not arise with a strand having a diameter of about 0.1 mm. However, for a strand having a large diameter, the resin in the softened state after extruded into the strand shape needs a support. However, contacts with the resin in the softened state may degrade the dimensional accuracy of the strand.

For the cooling and solidifying, typically, there is a wet cooling/solidifying method of immersing the strand immediately after extruded from an extruder in a water tank and subsequently bringing the strand into contact with a conveying roll to be conveyed. However, this method cannot be used for a strand formed of a water-soluble resin.

On the other hand, dry cooling/solidifying needs time for performing cooling until a solidified state that can endure contacts with the conveying roll is obtained, and hence needs a long distance and a high accuracy in the balance between the amount of the resin to be extruded and the control of the collecting speed in order to suppress drooping of the resin due to the deadweight.

There is also a problem that the strand may absorb moisture, if the strand is exposed to the air for a long time because of the long size of the apparatus. Hence, there is a need for conveying the strand in a space filled with dry air or dry nitrogen. Particularly, a water-soluble resin needs a water content control, because a water-soluble resin is more hygroscopic.

The present invention has an object to provide a strand producing apparatus capable of producing a strand having an excellent dimensional accuracy with a good productivity.

Solution to Problem

As a means of realizing the object described above, a strand producing apparatus includes an extrusion-molding unit configured to melt and knead a resin composition and extrusion-mold the resin composition into a strand shape, and a cooling/solidifying unit configured to cool and solidify the extrusion-molded resin composition having the strand shape. The cooling/solidifying unit is a roll unit that includes a groove having a curvature and internally includes a coolant flow path. Both of a coolant inlet and a coolant outlet of the coolant flow path are provided at the same end side of the roll unit.

Effects of the Invention

The present invention can provide a strand producing apparatus capable of producing a strand having an excellent dimensional accuracy with a good productivity.

Brief Description of the Drawings

FIG. 1 is a schematic view illustrating an example of a strand producing apparatus of the present invention;
FIG. 2 is a schematic view illustrating an example of a roll unit of a strand producing apparatus;
FIG. 3 is a schematic cross-sectional view illustrating an example of a cross-sectional shape of a groove of a roll unit;
FIG. 4 is a schematic view illustrating an example of an internal structure of a roll unit of a strand producing apparatus;
FIG. 5 is a schematic view illustrating another example of an internal structure of a roll unit of a strand producing apparatus;
FIG. 6 is a schematic view illustrating another example of a roll unit of a strand producing apparatus;
FIG. 7 is a schematic view illustrating an example of a cooling mechanism using a supercritical fluid as a coolant;
FIG. 8 is schematic view illustrating an example of a roll unit of an existing strand producing apparatus;
FIG. 9A is a plan view illustrating an example of a three-dimensional object produced using a strand obtained by a method for producing a strand of the present invention as a support forming material;
FIG. 9B is a cross-sectional view of a three-dimensional object of FIG. 9A taken along a line A-A';
FIG. 9C is a schematic cross-sectional view illustrating an example of a step of removing a support of a three-dimensional object of FIG. 9A;
FIG. 10 is a schematic view illustrating an example of a three-dimensional object producing apparatus;
FIG. 11 is a schematic view illustrating another example of a three-dimensional object producing apparatus; and
FIG. 12 is a schematic view illustrating yet another example of a three-dimensional object producing apparatus.

Mode for Carrying out the Invention

(Strand producing apparatus and method for producing strand)

A strand producing apparatus of the present invention includes an extrusion-molding unit and a cooling/solidifying unit.
The cooling/solidifying unit is a roll unit that includes a groove having a curvature and internally includes a coolant flow path. Both of a coolant inlet and a coolant outlet of the coolant flow path are provided at the same end side of the roll unit. The strand producing apparatus further includes other units as needed.
A method for producing a strand of the present invention includes an extrusion-molding step and a cooling/solidifying step.
The cooling/solidifying step is performed using a cooling/solidifying unit, which is a roll unit that includes a groove having a curvature and internally includes a coolant flow path, both of a coolant inlet and a coolant outlet of the coolant flow path being provided at the same end side of the roll unit. The method for producing a strand further includes other steps as needed.
The strand producing apparatus and the method for producing a strand of the present invention are based on the following finding. Existing techniques in which coolants are flowed in the axial direction are accompanied by a temperature difference between the coolant inlet side and the coolant outlet side in the roll unit, and homogeneous qualities cannot be expected in the case of conveying a plurality of strands because the strands cannot have a uniform cooled/solidified state from the coolant inlet side to the coolant outlet side. Moreover, the roll unit has a flat surface in order to prevent temperature rising in the roll unit. Therefore, particularly, a strand having a diameter of some millimeters will be caused to have a flattened cross-sectional shape due also to the deadweight of the strand, when brought into contact with the roll unit while the strand is in a softened state.
The strand producing apparatus of the present invention includes an extrusion-molding unit, and as a cooling/solidifying unit, a roll unit, one end side of which is provided with both of a coolant inlet and a coolant outlet of an internal coolant flow path and that includes a groove having a curvature. Therefore, the strand producing apparatus is capable of producing a strand-shaped resin composition having an excellent dimensional accuracy with a good productivity.
It is preferable to use a supercritical fluid as a coolant in the roll unit. This enables power saving and apparatus downsizing.

<Extrusion-molding step and extrusion-molding unit>

The extrusion-molding step is a step of melting and kneading a resin composition and extrusion-molding the resin composition into a strand shape, and is performed by the extrusion-molding unit.

Examples of the extrusion-molding unit include a single-screw extruder, a twin screw extruder, and a melt molder.

The method for melting and kneading is not particularly limited and may be appropriately selected from known methods depending on the intended purpose. Examples of the method include a method of continuously melting and kneading the components with a twin screw extruder, a single-screw extruder, or a melt extruder, or a method of melting and kneading the components batchwise with, for example, a kneader or a mixer. When the resin composition does not contain additives as other components, melting and kneading may be skipped.

The resin composition contains a resin and further contains other components as needed.

-Resin-

The resin is not particularly limited and may be appropriately selected depending on the intended purpose. Examples of the resin include a water-soluble resin, a water-dispersible resin, and a water-insoluble resin. Among these resins, a water-soluble resin is preferable.

Water-solubility of the water-soluble resin means that, for example, the resin dissolves in an amount of 100 g or greater in 1 L of water at 25 degrees C. It is possible to judge whether the resin has dissolved, based on whether the water is transparent. This can be confirmed by visual observation.

The water-soluble resin is not particularly limited and may be appropriately selected depending on the intended purpose. Examples of the water-soluble resin include polyethylene oxide, polyvinyl alcohol, polyacrylic acid, polyethylene-acrylic acid, polysarcosine, poly N-vinyl pyrrolidone, and polyvinyl acetate. One of these water-soluble resins may be used alone or two or more of these water-soluble resins may be used in combination.

-Other components-

Examples of the other components include a solvent, an inorganic compound, a lubricant, a colorant, a dispersant, and a plasticizer.

Examples of the solvent include ethylene glycol and propylene glycol.

The examples of the inorganic compound include titanium oxide, barium sulfate, zinc oxide, aluminum nitride, alumina, kaolin, barium titanate, silica, talc, clay, bentonite, magnesium carbonate, calcium carbonate, aluminum oxide, aluminum hydroxide, and mica. One of these inorganic compounds may be used alone or two or more of these inorganic compounds may be used in combination.

Examples of the lubricant include hydrogenated castor oil, fatty acid amide, fatty acid amine, alkylene bis-fatty acid amide, Japan tallow, carnauba wax, spermaceti, beeswax, lanolin, solid polyethylene glycol, silicon dioxide, calcium stearate, and magnesium stearate. One of these lubricants may be used alone or two or more of these lubricants may be used in combination.

Examples of the colorant include dyes and pigments.

<Cooling/solidifying step and cooling/solidifying unit>

The cooling/solidifying step is a step of cooling and solidifying an extrusion-molded resin composition having a strand shape (hereinafter may also be referred to as "strand"), and is performed by the cooling/solidifying unit.

As the cooling/solidifying unit, a roll unit, one end side of which is provided with both of a coolant inlet and a coolant outlet of an internal coolant flow path and which includes a groove having a curvature, is used. The roll unit does not have a temperature difference between the coolant inlet side and the coolant outlet side in the roll unit, and in conveyance of a plurality of strands, can make the cooled/solidified state of the strands uniform from the coolant inlet side to the coolant outlet side.

The coolant flow path of the roll unit preferably has a turnaround structure at the other end side opposite to the coolant inlet and the coolant outlet. The coolant has a low temperature at the coolant inlet, but is deprived of heat by the roll unit as the coolant proceeds through the coolant flow path and cools the roll unit, and has an elevated temperature when the coolant arrives at the coolant outlet. With the turnaround structure, a temperature obtained by adding up and averaging the coolant temperature at the inlet and the coolant temperature at the outlet, a coolant temperature at about the turnaround point of the coolant flow path in the roll unit, and the temperatures at the inlet and the outlet can be the same temperature.

The roll unit can maintain the curved surface shape of a strand during cooling and solidifying, because the roll unit includes a groove having a curvature.

The curvature radius R of the groove is preferably a curvature radius that is the same as the intended diameter of the strand.

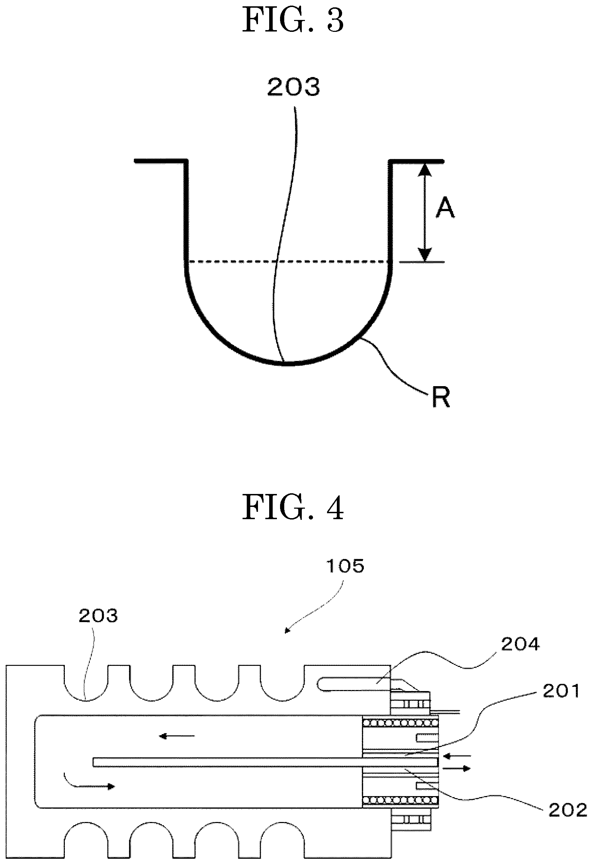

Here, as illustrated in FIG. 3, when the curvature radius of the groove of the roll unit 105 is assumed to be R, it is preferable that the dimension of the height A satisfy R=A, in order that no straying may occur during conveyance.

The roll unit preferably includes a rotating mechanism. Because the roll unit rotates by the functioning of the rotating mechanism, the roll unit has a uniform surface temperature distribution in the horizontal direction and can level off the cooling efficiency for the strand.

Examples of the rotating mechanism include a motor and a servo motor.

The roll unit preferably includes a temperature controlling mechanism.

Examples of the temperature controlling mechanism include a combination of a thermocouple provided in the roll unit and a thermostat.

It is preferable that the roll unit include the rotating mechanism and the temperature controlling mechanism, because the cooling efficiency is leveled off at each point of the roll and the temperature distribution in the horizontal direction of the roll unit becomes uniform.

The roll unit preferably includes a water content controlling mechanism. This makes it possible to adjust the water content of the strand to less than 2,000 ppm by mass.

Examples of the water content controlling mechanism include a heater and a hot air blower.

In terms of improving the dimensional accuracy of the strand, it is preferable to provide a circular slit that is formed by joining two roll units with each other and through which the strand is passed, where each of the two roll units is the roll unit described above.

The coolant used in the roll unit is not particularly limited and may be appropriately selected depending on the intended purpose. Examples of the coolant include a liquid, a gas, and a supercritical fluid.

As the coolant that is liquid at normal temperature and normal pressure, for example, ethylene glycol, propylene glycol, silicone oil, water, or a mixture liquid with water is mainly used.

As the coolant that is gas, for example, liquid nitrogen, fluorocarbon, or air is mainly used.

The supercritical fluid is effective because the supercritical fluid can provide a cooling effect for a long term without deteriorating or evaporating and without consuming electricity, so long as the supercritical fluid is sealed in a high-pressure cylinder. The cooling principle of the supercritical fluid is to undergo a density drop when transforming from the supercritical fluid into an atmospheric pressure fluid and take away the surrounding temperature to cause a temperature drop of an article which the supercritical fluid contacts.

The supercritical fluid refers to a fluid that exists as a non-condensable high-density fluid in temperature/pressure ranges beyond the limits (critical points) until which a gas and a liquid can coexist, and does not condense even when compressed.

Examples of the substance constituting the supercritical fluid include carbon monoxide, carbon dioxide, dinitrogen oxide, nitrogen, methane, ethane, propane, 2,3-dimethyl butane, and ethylene. Among these substances, carbon dioxide is preferable because, for example, carbon dioxide has a critical pressure of about 7.4 MPa and a critical temperature of about 31 degrees C, can easily form a supercritical state, is incombustible, and is easy to handle.

When the supercritical fluid is supercritical carbon dioxide, the temperature of the supercritical fluid is preferably 25 degrees C or higher, and the pressure of the supercritical fluid is preferably 5 MPa or higher. Supercritical carbon dioxide can also be used as a dry atmosphere after used as a coolant in the roll unit.

<Other steps and other steps>

Examples of the other steps and the other units include a controlling step and a controlling unit.

The controlling step is a step of controlling each step and can be suitably performed by the controlling unit.

The controlling unit is not particularly limited and may be appropriately selected depending on the intended purpose, so long as the controlling unit can control the operation of each unit. Examples of the controlling unit include devices such as a sequencer and a computer.

<Strand>

A strand produced by the method for producing a strand of the present invention preferably has a water content of less than 2,000 ppm by mass (0.2% by mass) and more preferably 1,500 ppm by mass or less.

When the water content of the strand is less than 2,000 ppm by mass, there is an advantage that the strand has a good humidity resistance and does not become tacky due to moisture absorption in an environment of use.

For example, the water content can be measured with a Karl Fischer moisture titrate, with heating of the strand with a moisture vaporizer.

The average horizontal diameter of the strand is preferably 1 mm or greater but 5 mm or less.

The average vertical diameter of the strand is preferably 1 mm or greater but 5 mm or less.

The coefficients of variation of the horizontal diameter and the vertical diameter are preferably 2.0% or lower and more preferably 1.5% or lower.

When the coefficients of variation are 2.0% or lower, the strand has a good dimensional accuracy.

The ranges of fluctuation of both of the horizontal diameter and the vertical diameter (range of fluctuation being difference between the maximum diameter and the minimum diameter) of the strand are preferably 0.5 mm or less and more preferably 0.2 mm or less.

The average diameters, the coefficients of variation, and the ranges of fluctuation of the strand can be obtained by measuring the vertical diameter and horizontal diameter of the strand 10 times at different measuring positions with, for example, a micrometer (MDC-25NX, available from Mitutoyo Corporation).

The average diameters, the coefficients of variation, and the ranges of fluctuation of the strand can be controlled based on, for example, the extrusion hole of the extruder, temperature conditions, and tension conditions during winding. It is also possible to control these values by adjusting tension conditions during winding with further heating after cooling.

It is preferable that the strand have water-solubility described below.

Specifically, the strand having a diameter of 1.8 mm is cut to have a length of 50 mm. The cut strand is put in a 50 mL beaker, into which ion-exchanged water (40 mL) is poured. The strand is immersed in the ion-exchanged water set to a water temperature of 25 degrees C and left to stand still for 60 minutes. Subsequently, the solid matter is taken out, the moisture on the surface is wiped with a waste cloth, and then the solid matter is dried at 60 degrees C for 3 hours. The mass decreasing ratio is calculated according to a mathematical formula 1 below based on the masses before and after the treatment. This mass decreasing ratio is preferably 90% or higher.

$$\text{Mass decreasing ratio} = [(\text{mass before treatment} - \text{mass after treatment and drying})/\text{mass before treatment}] \times 100$$

$$\text{Mathematical formula 1}$$

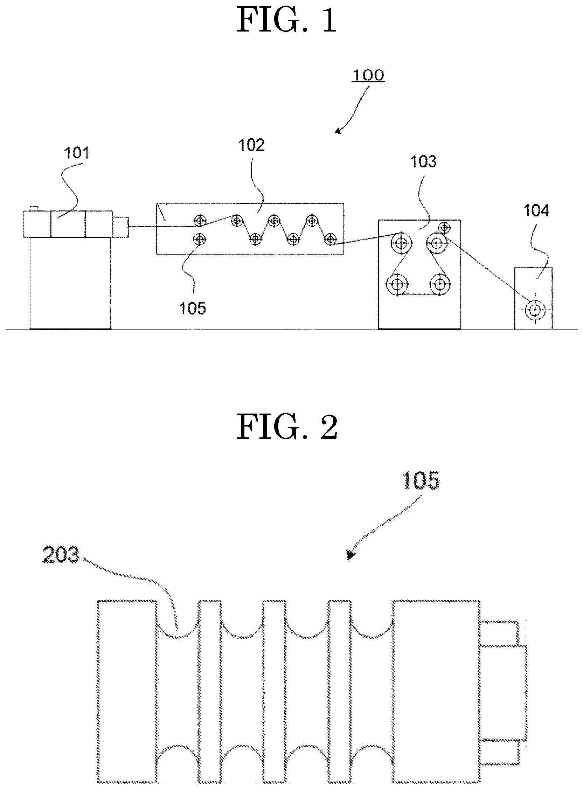

Here, FIG. 1 is a schematic view illustrating an example of a strand producing apparatus 100 of the present invention. The strand producing apparatus 100 of FIG. 1 includes an extruder 101 configured to melt the resin composition and extrude the resin composition into a strand shape, a cooling/solidifying unit 102 internally including a plurality of roll units 105, a collecting device 103 configured to maintain a tension of the strand being conveyed, and a wind-up device 104 configured to wind up the strand.

The strand-shaped resin composition (strand) extruded from the extruder 101 is rapidly cooled and solidified by the roll units 105 installed in the cooling/solidifying unit 102. The cooled, solidified strand is conveyed by the collecting device 103 and wound up around, for example, a bobbin or a core by the wind-up device 104.

The cooling/solidifying unit 102 is internally filled with dry carbon dioxide, which is a supercritical fluid serving as a coolant and jetted by the roll units 105.

As illustrated in FIG. 2, the roll units 105 include grooves 203 having curves surfaces. With the grooves 203, the strand melted and extruded by the extruder 101 can be cooled and solidified with maintaining the curved surface shape when cooled and solidified.

As illustrated in FIG. 3, the grooves of the roll units 105 preferably have a curvature radius R and a height dimension A that satisfies R=A in order that no straying may occur during conveyance.

The curvature radius R of the grooves is preferably a curvature radius that is the same as the intended diameter of the strand.

FIG. 4 is a schematic view illustrating an internal structure of a roll unit 105. In the roll unit 105 of FIG. 4, the coolant flow path has a turnaround structure at the other end side opposite to a coolant inlet 201 and a coolant outlet 202.

As illustrated in FIG. 4, the coolant that is let in to flow from the coolant inlet 201 cools the main body of the roll unit on a constant basis by passing through the coolant flow path in the roll unit 105. The coolant has a low temperature at the coolant inlet 201, but is deprived of heat by the roll unit as the coolant proceeds through the coolant flow path and cools the roll unit, and has an elevated temperature when the coolant arrives at the coolant outlet 202. Specifically, a temperature obtained by adding up and averaging the coolant temperature at the inlet and the coolant temperature at the outlet and a coolant temperature at about the turnaround point of the coolant flow path in the roll unit become the same temperature. Moreover, because the roll unit rotates by the functioning of the rotating mechanism, the roll unit has a uniform surface temperature distribution in the horizontal direction and can level off the cooling efficiency for the strand.

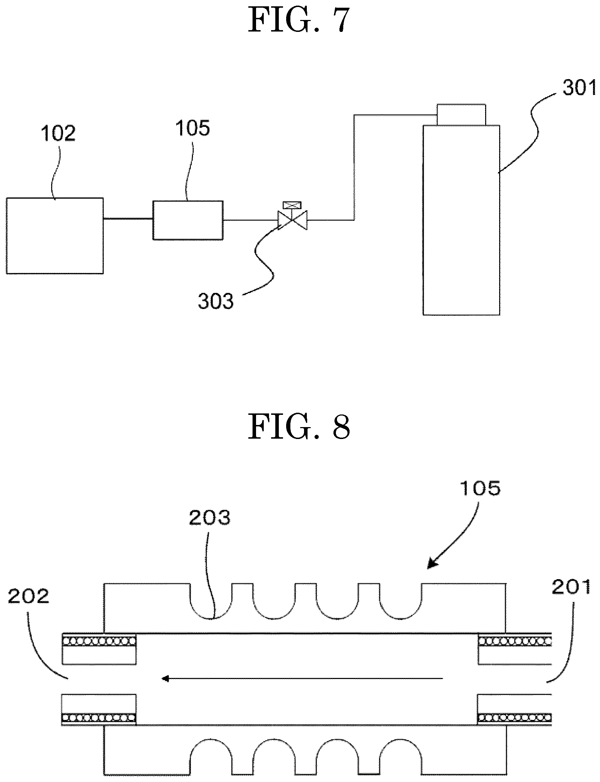

Here, control for cooling using supercritical carbon dioxide as a coolant in the roll unit 105 will be described with reference to FIG. 7.

Supercritical carbon dioxide is let to flow into the roll unit 105 as a coolant. Supercritical carbon dioxide is supplied via a solenoid valve 303 from a high-pressure gas cylinder 301 filled with an internal pressure of 14.7 MPa.

Because the internal flow path in the roll unit 105 is at the atmospheric pressure, supercritical carbon dioxide undergoes a density drop when transforming into atmospheric pressure carbon dioxide and takes away the surrounding temperature. In this way, the roll unit 105 is cooled.

As illustrated in FIG. 4, a thermocouple 204 is installed in the roll unit 105. Because the roll unit 105 rotates, the thermocouple 204 is electrically continuous with a thermostat via a rotary electrode, to enable designated temperature setting.

Returning to FIG. 7, temperature control within a set temperature range is enabled by flow rate control on supercritical carbon dioxide by the solenoid valve 303.

Moreover, atmospheric pressure carbon dioxide used in the roll unit 105 is again let to flow into the cooling/solidifying unit 102. Because having a low humidity, atmospheric pressure carbon dioxide can bring about a low-humidity environment in the cooling/solidifying unit 102.

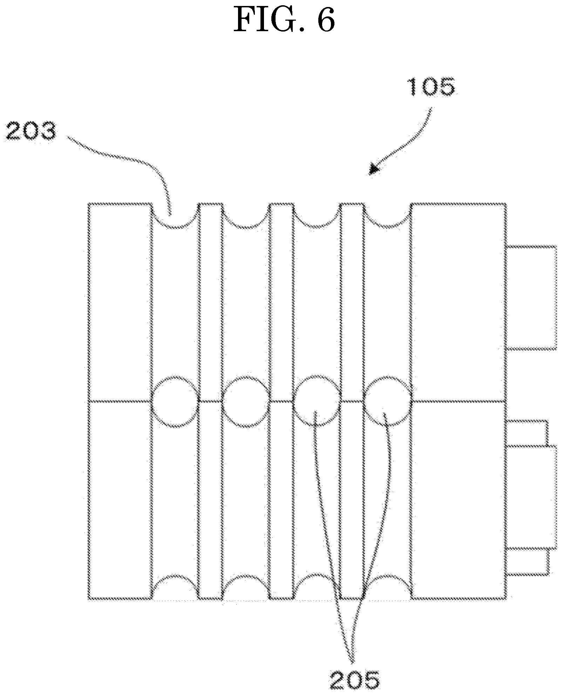

Next, FIG. 6 is a schematic cross-sectional view illustrating another example of the roll unit 105. The roll unit of FIG. 6 is obtained by closely attaching with each other, two roll units, each of which includes a groove having a dimension A=0 in the cross-sectional shape of the groove of the roll unit illustrated in FIG. 3. As a result, a circular slit 205 is formed. When a strand is passed through this circular slit 205, a strand having an intended dimensional accuracy can be obtained.

The strand produced by the method for producing a strand of the present invention is not particularly limited and may be used for various purposes including, for example, packaging materials for foods, cosmetics, pharmaceuticals, fragrances, and fertilizers. As another purpose of use, the strand can be used as a material for producing a three-dimensional object and a support forming material (for supporting a three-dimensional object). It is preferable to use the strand as the support forming material (for supporting a three-dimensional object) among these purposes of use.

Next, a three-dimensional object producing method using the strand as a strand for producing a three-dimensional object will be described.

<Three-dimensional object producing method and three-dimensional object producing apparatus>

A three-dimensional object producing method used in the present invention is a method for producing a three-dimensional object using the strand, preferably includes a step of producing a three-dimensional object using the strand and a step of applying water to the three-dimensional object to dissolve and remove part of the three-dimensional object, and further includes other steps as needed.

A three-dimensional object producing apparatus used in the present invention includes a unit configured to produce a three-dimensional object using the strand, preferably includes a unit configured to apply water to the three-dimensional object to dissolve and remove part of the three-dimensional object, and further includes other units as needed.

The three-dimensional object producing method used in the present invention can be suitably performed by the three-dimensional object producing apparatus used in the present invention.

Another mode of the three-dimensional object producing method used in the present invention may include a step of producing a three-dimensional object and a support for supporting the three-dimensional object and a step of immersing the obtained three-dimensional object and the support in water to collapse and remove the support. The support may be formed using the strand.

Another mode of the three-dimensional object producing apparatus may include a unit configured to produce the three-dimensional object and a support for supporting the three-dimensional object and a unit configured to immerse the obtained three-dimensional object and the support in water to collapse and remove the support.

The method for forming the three-dimensional object using the strand is not particularly limited, and a known three-dimensional object producing apparatus of a fused deposition molding (FDM) type may be appropriately selected depending on the intended purpose. Examples of the method include a method of melting the strand and discharging the strand in a scanning manner with a printer for producing a three-dimensional object serving as the three-dimensional object producing apparatus, to form a layer of the material for producing a three-dimensional object and a layer of the support forming material having predetermined shapes, and repeating this operation to laminate layers.

The strand described above is used as the strand and can be used as the material for producing a three-dimensional object and the support forming material (for supporting a three-dimensional object) in the production of a three-dimensional object. Of these materials, it is preferable to use the strand as the support forming material (for supporting a three-dimensional object).

The strand can be suitably used in a three-dimensional object producing apparatus of a fused deposition molding (FDM) type.

-Method for producing strand for producing three-dimensional object-

The method for producing the strand for producing a three-dimensional object is not particularly limited and may be appropriately selected from known methods depending on the intended purpose. The diameter of the strand for producing a three-dimensional object can be controlled based on, for example, the extrusion hole of the single-screw extruder, temperature conditions, and tension conditions during winding. It is also possible to stretch the strand with adjustment of tension conditions during winding with heating after cooling.

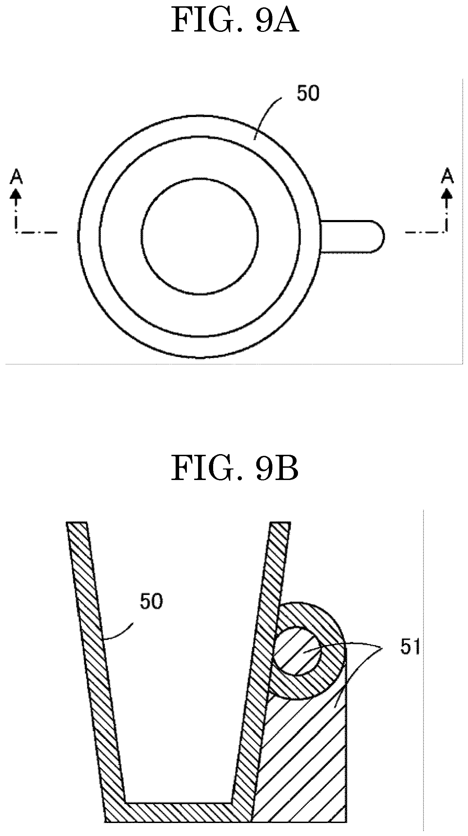

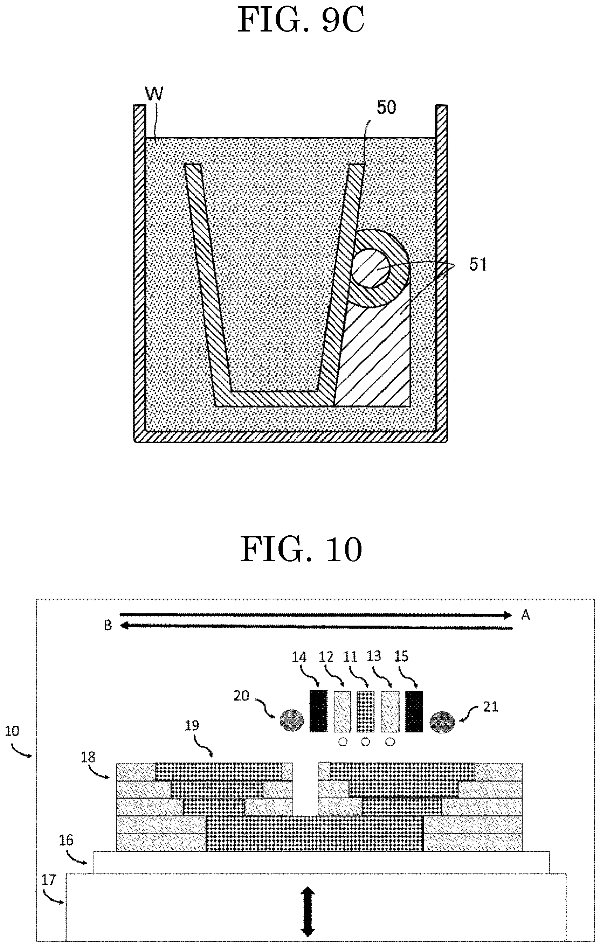

Here, FIG. 9A is a plan view illustrating an example of a three-dimensional object produced using the strand as a support forming material. FIG. 9B is a cross-sectional view of the three-dimensional object of FIG. 9A taken along a line A-A'. FIG. 9C is a schematic cross-sectional view illustrating an example of a step of removing a support of the three-dimensional object of FIG. 9A.

When a strand formed of a water-insoluble resin is used for forming a three-dimensional object, a printer for producing a three-dimensional object mounted with two or more melting heads is used, and the material for producing a three-dimensional object is used in one melting head whereas the support forming material is used in another melting head. Using the printer for producing a three-dimensional object, the materials are melted and discharged with the melting heads, to form a layer of a support portion and a layer of a three-dimensional object portion having predetermined shapes, and this operation is repeated to laminate layers. In this way, a three-dimensional object 50 can be obtained. That is, the three-dimensional object 50 formed of the material for producing a three-dimensional object has a shape at least partially matching the shape of the support forming material 51 (see FIG. 9B). Immersion in water W causes the support forming material to dissolve (collapse) and to be easily removed from the three-dimensional object. Therefore, a three-dimensional object with little damage and little support forming material residue can be obtained.

A specific embodiment of the three-dimensional object producing method and the three-dimensional object producing apparatus used in the present invention will be described below.

A three-dimensional object is obtained using the strand as the material for producing a three-dimensional object and the support forming material.

As described above, in order to obtain a three-dimensional object, the material for producing a three-dimensional object (hereinafter may also be referred to as "material for a soft shaped body") is placed at an object portion, and the support forming material (hereinafter may also be referred to as "material for a hard shaped body") is placed at a support portion.

In the three-dimensional object producing apparatus, the material for producing a three-dimensional object and the support forming material are conveyed in the form of strands to the heating heads through conveying tubes. The conveyed material for producing a three-dimensional object and support forming material are heated and dissolved in the heating heads, and discharged, to form a layer of the material for producing a three-dimensional object and a layer of the support forming material. Through repetition of this operation, a three-dimensional object can be produced by laminated object manufacturing.

The heating temperature in the heating heads is not particularly limited and may be appropriately selected depending on the intended purpose, so long as the strand can be dissolved.

First, surface data or solid data representing a three-dimensional shape designed by three-dimensional CAD or a three-dimensional shape scanned with a three-dimensional scanner or a digitizer is converted into a STL format and input to the three-dimensional object producing apparatus.

Based on the input data, an object producing orientation for producing a three-dimensional shape to be produced is determined. The object producing orientation is not particularly limited, and, typically, an orientation that has the smallest size in the Z-direction (height direction) is selected.

After the object producing orientation is determined, the projected areas of the three-dimensional shape on an X-Y plane, an X-Z plane, and a Y-Z plane are obtained. In order to reinforce the obtained block shape, the surfaces of the block shape except for the top surface in the X-Y plane are shifted outward by an appropriate distance. The distance by which the surfaces are shifted is not particularly limited and is different depending on the shape, the size, and a liquid material used, but is about 1 mm or longer but 10 mm or shorter. In this way, a block shape enclosing the shape to be produced (with the top surface opened) is specified.

This block shape is sliced in the Z-direction at intervals determined by the average thickness of one layer. The average thickness of one layer is different depending on the materials used and is not to be defined flatly, but is preferably 10 micrometers or greater but 50 micrometers or less.

When there is one three-dimensional object to be produced, this block shape is disposed in the center of a Z stage (which is an object placing table that is configured to lift down by a distance corresponding to one layer every time one layer is formed). In the case of producing a plurality of objects simultaneously, block shapes are disposed on the Z stage, or alternatively, the block shapes may be stacked one upon another. These operations of block shaping, slice data (contour data) generation, and Z stage positioning may be automated with designation of the materials to be used.

Next, in an object producing step, the position to which the material for producing a three-dimensional object is discharged and the position to which the support forming material is discharged are controlled by inside-outside judgment based on the outermost contour line in the slice data (for judging which of the material for producing a three-dimensional object and the support forming material is to be discharged to a position on the contour line).

The discharging order is to discharge the support forming material for forming a support layer first, and then discharge the material for producing a three-dimensional object for producing an object layer next.

In this discharging order, a reservoir such as a groove or a dam is formed first with the support, and the material for producing a three-dimensional object is discharged into the reservoir. This eliminates the risk of "drooping" even if a material that is liquid at normal temperature is used as the material for producing a three-dimensional object, and enables a wide-range use of, for example, photocurable resins and thermosetting resins.

In order to further reduce the object producing time, a preferable method is to laminate layers by discharging both of the material for producing a three-dimensional object and the support forming material on both of the outward path and the homeward path of an integrated inkjet head.

Further, high-speed object production is available by positioning an active energy ray irradiator to adjoin the heating head configured to discharge the material for producing a three-dimensional object.

In order to smooth a layer formed for producing a three-dimensional object, a smoothing treatment is performed immediately after a curing treatment is performed.

The smoothing treatment is for smoothing the surface of a cured layer using a smoothing member such as a roller and a blade. This improves the accuracy of each layer, and enables accurate production of a three-dimensional object as a whole.

Here, in order to reduce the layer lamination time and improve smoothness of the layers, it is preferable to position the smoothing member to adjoin an ultraviolet ray irradiator.

FIG. 10 is a schematic view illustrating an example of a three-dimensional object producing apparatus.

As illustrated in FIG. 10, using a head unit in which inkjet heads are arranged, a three-dimensional object producing apparatus 10 is configured to laminate layers by discharging the material for producing a three-dimensional object from an object material discharging head unit 11, discharging the support forming material from support material discharging head units 12 and 13, and curing the material for producing a three-dimensional object with adjoining ultraviolet ray irradiators 14 and 15.

That is, the support forming material is discharged from the heating heads (support material discharging head units 12 and 13) and solidified to form a first support layer including a reservoir. The material for producing a three-dimensional object is discharged into the reservoir of the first support layer from the inkjet head (object material discharging head unit 11) and irradiated with an active energy ray to be cured. Subsequently, a smoothing treatment is applied to the cured layer by smoothing members 20 and 21 having a roller shape, to form a first object layer.

Next, the support forming material that is melted is discharged onto the first support layer and solidified to laminate a second support layer including a reservoir. The material for producing a three-dimensional object is discharged into the reservoir of the second support layer and irradiated with an active energy ray to laminate a second object layer on the first object layer. A smoothing treatment is further applied, to produce a three-dimensional object 19.

When the multi-head unit moves in the direction of an arrow A, basically, a support 18 and the three-dimensional object 19 are formed on an object support substrate 16, using the support material discharging head unit 12, the object material discharging head unit 11, and the ultraviolet ray irradiator 15. Simultaneously, the support 18 and the three-dimensional object 19 are smoothed with the smoothing member 21 having a roller shape. The support material discharging head unit 13 and the ultraviolet ray irradiator 14 may be used supplementarily.

When a smoothing member having a roller shape is used, rotating the smoothing member having a roller shape in the reverse direction from the operating direction enables more effective functioning of the smoothing effect.

When the multi-head unit moves in the direction of an arrow B, basically, the support 18 and the three-dimensional object 19 are formed on the object support substrate 16, using the support material discharging head unit 13, the object material discharging head unit 11, and the ultraviolet ray irradiator 14. Simultaneously, the support 18 and the three-dimensional object 19 are smoothed with the smoothing member 20 having a roller shape. The support material discharging head unit 12 and the ultraviolet ray irradiator 15 may be used supplementarily.

Moreover, in order to maintain the material discharging head units 11, 12, and 13 and the ultraviolet ray irradiators 14 and 15 at a constant gap from the three-dimensional object 19 and the support 18, layer lamination is performed while the stage 17 is lifted down in accordance with the number of times of layer lamination.

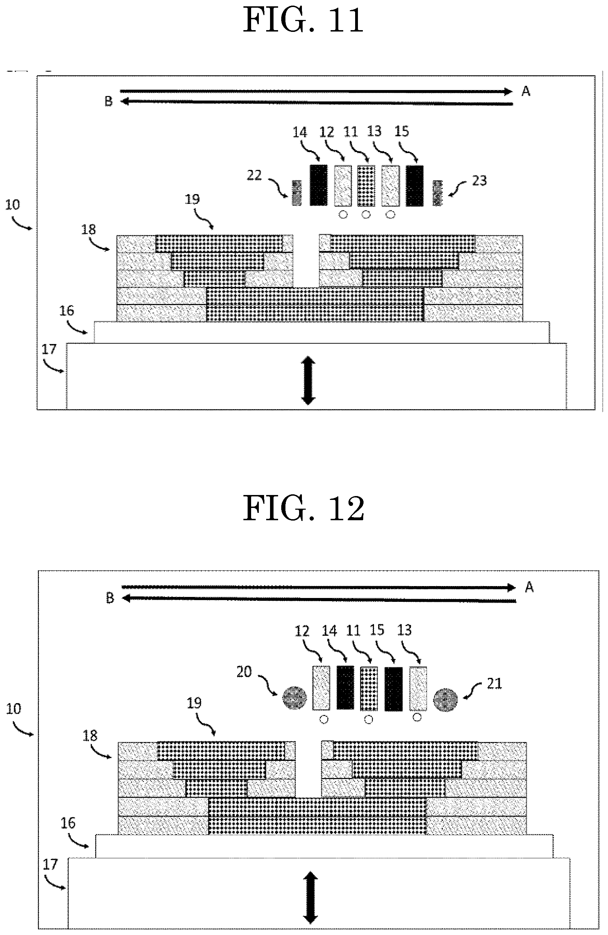

FIG. 11 is a schematic view illustrating another example of the three-dimensional object producing apparatus. Specifically, the smoothing members 20 and 21 of FIG. 10 having a roller shape are changed to smoothing members 22 and 23 having a blade shape. When the surface of the object is to be scraped for smoothing, use of the smoothing members of FIG. 11 having a blade shape is more effective than the smoothing members having a roller shape used in FIG. 10.

FIG. 12 is a schematic view illustrating yet another example of the three-dimensional object producing apparatus, illustrating another example of a three-dimensional object producing step capable of improving the smoothness of each layer better than in FIG. 10. The basic step is the same as in FIG. 10, but the difference is that the ultraviolet ray irradiator 14 or 15 is arranged between the object material discharging head unit 11 and the support material discharging head unit 12 or 13.

In the three-dimensional object producing apparatus 10 of this type, the ultraviolet ray irradiators 14 and 15 are used in moving in the directions of both of the arrows A and B. The surface of a laminated layer of the support forming material is smoothed by the heat generated along with the ultraviolet ray irradiation. As a result, the dimensional stability of the object is improved.

The three-dimensional object producing apparatus 10 may additionally include, for example, a liquid collecting mechanism and a recycling mechanism. The three-dimensional object producing apparatus may also include a blade configured to remove a liquid material that has adhered to a nozzle surface and a mechanism configured to detect a nozzle that has failed in discharging. Furthermore, it is also preferable to control an environmental temperature in the three-dimensional object producing apparatus during production of a three-dimensional object.

Examples

The present invention will be described below by way of Examples. The present invention should not be construed as being limited to these Examples.

(Example 1)

Using a counter rotating twin screw extruder LABPLAST MILL (available from Toyo Seiki Seisaku-Sho, Ltd.) as the strand producing apparatus illustrated in FIG. 1 and including the roll unit illustrated in FIG. 2 to FIG. 4, polyvinyl alcohol (B-05, available from Denka Company Limited) (90 parts by mass) as a water-soluble resin and ethylene glycol (available from Wako Pure Chemical Industries Ltd.) (10 parts by mass) as a solvent were fed from material feeding ports with the cylinder temperature set to 200 degrees C. The materials were melted and kneaded at a cylinder temperature of 200 degrees C at a screw rotating speed of 20 rpm.

In the roll unit illustrated in FIG. 2, the coolant inlet and the coolant outlet of the internal coolant flow path were provided at the same side (the type of the present invention), and liquid nitrogen was used as a coolant. Further, as illustrated in FIG. 3, the groove of the roll unit had a curvature radius R of 0.875 mm and a height A of 0.875 mm.

With the strand producing apparatus of Example 1, a strand was produced by extrusion-molding from three die holes having a die hole diameter of 1.8 mm at a discharging amount of 140 g/min, conveyed in a stretching manner with cooling/solidifying, and wound up around a core by a winder. In the way described above, a strand of Example 1 was produced.

Next, various properties of the obtained strand were evaluated in the manners described below. The results are presented in Table 1.

<Measurement of surface temperature of strand>

The surface temperature of the obtained strand immediately after produced was measured with an infrared radiometer (IT-545NH, available from Horiba, Ltd.).

<Measurement of water content of strand>

The obtained strand was cut to have a length of 50 mm. The water content (ppm by mass) of the cut strand was measured with a Karl Fischer moisture titrate (available from Kyoto Electronics Manufacturing Co., Ltd., MCK610), with heating of the strand with a moisture vaporizer (available from Kyoto Electronics Manufacturing Co., Ltd., ADP-611) set to 170 degrees C.

<Dimensional accuracy of strand>

The vertical diameter and the horizontal diameter of the obtained strand were measured 10 times at different measuring positions with a micrometer (MDC-25NX, available from Mitutoyo Corporation), to obtain the average diameters, the coefficients of variation, and the ranges of fluctuation. The diameters of the strand were rounded off at the third decimal place.

(Example 2)

A strand was produced in the same manner as in Example 1, except that unlike in Example 1, supercritical carbon dioxide was used as a coolant, and was evaluated in the same manners. The results are presented in Table 1.

(Example 3)

A strand was produced in the same manner as in Example 1, except that unlike in Example 1, the roll unit illustrated in FIG. 2 was changed to the roll unit illustrated in FIG. 6 and supercritical carbon dioxide was used as a coolant, and was evaluated in the same manners. The results are presented in Table 2.

The roll unit illustrated in FIG. 6 was obtained by closely attaching with each other, two roll units, each of which included a groove having a dimension A=0 in the cross-sectional shape of the groove of the roll unit illustrated in FIG. 3. As a result, a circular slit 205 was formed. Passing a strand through this circular slit 205 would provide a strand having a better dimensional accuracy.

(Comparative Example 1)

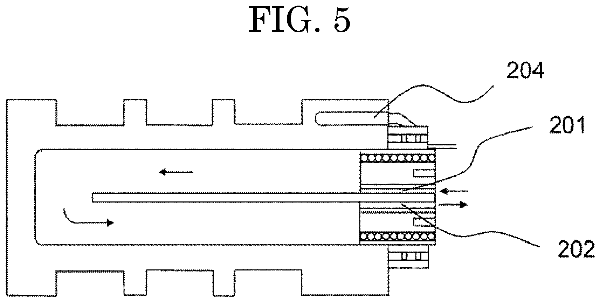

A strand was produced in the same manner as in Example 1, except that unlike in Example 1, a roll unit illustrated in FIG. 5 and having a groove with no curvature was used and dry air was used as a coolant, and various properties of the strand were evaluated in the same manners. The results are presented in Table 3.

(Comparative Example 2)

A strand was produced in the same manner as in Comparative Example 1, except that unlike in Comparative Example 1, supercritical carbon dioxide was used as a coolant, and various properties of the strand were evaluated in the same manners as in Example 1. The results are presented in Table 3.

(Comparative Example 3)

A strand was produced in the same manner as in Example 1, except that unlike in Example 1, the roll unit illustrated in FIG. 8 was used and a supercritical carbon dioxide fluid was used as a coolant, and various properties of the strand were evaluated in the same manners as in Example 1. The results are presented in Table 4.

The roll unit 105 illustrated in FIG. 8 had a groove 203 with a curvature radius R of 0.875 mm in the surface, and had a structure (a through system) in which a coolant inlet 201 and a coolant outlet 202 were faced with each other in the horizontal direction. The coolant would move in the direction of an arrow in FIG. 8.

Table 1

| | Unit | Ex. 1 | | | Ex. 2 | | |
|---|---|---|---|---|---|---|---|
| Polyvinyl alcohol | part by mass | 90 | | | 90 | | |
| Ethylene glycol | part by mass | 10 | | | 10 | | |
| Cylinder temperature | degree C | 200 | | | 200 | | |
| Number of strands discharged | strand(s) | 3 | | | 3 | | |
| Curvature radius R of groove of roll unit | mm | 0.875 | | | 0.875 | | |
| Coolant | - | Liquid nitrogen | | | Supercritical carbon dioxide | | |
| Coolant flow path of roll unit | - | Type of the present invention | | | Type of the present invention | | |
| Strand position | - | 1 | 2 | 3 | 1 | 2 | 3 |
| Discharging amount | g/min | 140 | 140 | 140 | 140 | 140 | 140 |
| Strand surface temperature | degree C | 22 | 22 | 22 | 19 | 19 | 19 |

(continued)

| | | Unit | Ex. 1 | | | Ex. 2 | | |
|---|---|---|---|---|---|---|---|---|
| Strand evaluation result | Average vertical diameter | mm | 1.73 | 1.73 | 1.73 | 1.72 | 1.72 | 1.72 |
| | Coefficient of vertical variation | % | 1.3 | 1.3 | 1.3 | 1.1 | 1.1 | 1.1 |
| | Range of vertical fluctuation | mm | 0.11 | 0.11 | 0.10 | 0.08 | 0.09 | 0.08 |
| | Average horizontal diameter | mm | 1.74 | 1.74 | 1.74 | 1.73 | 1.73 | 1.73 |
| | Coefficient of horizontal variation | % | 1.4 | 1.4 | 1.4 | 1.1 | 1.1 | 1.1 |
| | Range of horizontal fluctuation | mm | 0.10 | 0.11 | 0.11 | 0.08 | 0.08 | 0.08 |
| | Water content | ppm by mass | 1300 | 1200 | 1300 | 1200 | 1200 | 1300 |

Table 2

| | | Unit | Ex. 3 | | |
|---|---|---|---|---|---|
| Polyvinyl alcohol | | part by mass | 90 | | |
| Ethylene glycol | | part by mass | 10 | | |
| Cylinder temperature | | degree C | 200 | | |
| Number of strands discharged | | strand(s) | 3 | | |
| Curvature radius R of groove of roll unit | | mm | 0.875 | | |
| Coolant | | - | Supercritical carbon dioxide | | |
| Coolant flow path of roll unit | | - | Type of the present invention | | |
| Strand position | | - | 1 | 2 | 3 |
| Discharging amount | | g/min | 140 | 140 | 140 |
| Strand surface temperature | | degree C | 19 | 19 | 19 |
| Strand evaluation result | Average vertical diameter | mm | 1.72 | 1.72 | 1.72 |
| | Coefficient of vertical variation | % | 1.0 | 1.0 | 1.0 |
| | Range of vertical fluctuation | mm | 0.08 | 0.10 | 0.09 |
| | Average horizontal diameter | mm | 1.72 | 1.72 | 1.72 |
| | Coefficient of horizontal variation | % | 0.90 | 0.90 | 0.90 |
| | Range of horizontal fluctuation | mm | 0.10 | 0.09 | 0.10 |
| | Water content | ppm by mass | 1200 | 1200 | 1200 |

Table 3

| | Unit | Comp. Ex. 1 | Comp. Ex. 2 |
|---|---|---|---|
| Polyvinyl alcohol | part by mass | 90 | 90 |

(continued)

|  |  | Unit | Comp. Ex. 1 | | | Comp. Ex. 2 | | |
|---|---|---|---|---|---|---|---|---|
| Ethylene glycol | | part by mass | 10 | | | 10 | | |
| Cylinder temperature | | degree C | 200 | | | 200 | | |
| Number of strands discharged | | strand(s) | 3 | | | 3 | | |
| Curvature radius R of groove of roll unit | | mm | No curvature | | | No curvature | | |
| Coolant | | - | Dry air | | | Supercritical carbon dioxide | | |
| Coolant flow path of roll unit | | - | Type of the present invention | | | Type of the present invention | | |
| Strand position | | - | 1 | 2 | 3 | 1 | 2 | 3 |
| Discharging amount | | g/min | 140 | 140 | 140 | 140 | 140 | 140 |
| Strand surface temperature | | degree C | 85 | 85 | 85 | 23 | 23 | 23 |
| Strand evaluation result | Average vertical diameter | mm | 1.55 | 1.55 | 1.55 | 1.62 | 1.62 | 1.61 |
| | Coefficient of vertical variation | % | 9.6 | 9.5 | 9.6 | 4.8 | 4.8 | 4.7 |
| | Range of vertical fluctuation | mm | 0.63 | 0.62 | 0.63 | 0.63 | 0.63 | 0.61 |
| | Average horizontal diameter | mm | 1.57 | 1.57 | 1.57 | 1.64 | 1.64 | 1.64 |
| | Coefficient of horizontal variation | % | 9.6 | 9.6 | 9.6 | 4.4 | 4.3 | 4.4 |
| | Range of horizontal fluctuation | mm | 0.65 | 0.65 | 0.65 | 0.37 | 0.36 | 0.37 |
| | Water content | ppm by mass | 2600 | 2600 | 2600 | 2000 | 2000 | 2000 |

Table 4

|  | Unit | Comp. Ex. 3 | | |
|---|---|---|---|---|
| Polyvinyl alcohol | part by mass | 90 | | |
| Ethylene glycol | part by mass | 10 | | |
| Cylinder temperature | degree C | 200 | | |
| Number of strands discharged | strand(s) | 3 | | |
| Curvature radius R of groove of roll unit | mm | 0.875 | | |
| Coolant | - | Supercritical carbon dioxide | | |
| Coolant flow path of roll unit | - | Through system | | |
| Strand position | - | 1 | 2 | 3 |
| Discharging amount | g/min | 140 | 140 | 140 |
| Strand surface temperature | degree C | 18 | 21 | 22 |

(continued)

|  | | Unit | Comp. Ex. 3 | | |
|---|---|---|---|---|---|
| Strand evaluation result | Average vertical diameter | mm | 1.68 | 1.73 | 1.75 |
| | Coefficient of vertical variation | % | 1.5 | 1.4 | 1.4 |
| | Range of vertical fluctuation | mm | 0.12 | 0.11 | 0.12 |
| | Average horizontal diameter | mm | 1.69 | 1.74 | 1.76 |
| | Coefficient of horizontal variation | % | 1.5 | 1.4 | 1.4 |
| | Range of horizontal fluctuation | mm | 0.13 | 0.1 | 0.13 |
| | Water content | ppm by mass | 2000 | 2000 | 2000 |

Aspects of the present invention are as follows, for example.

<1> A strand producing apparatus including:

an extrusion-molding unit configured to melt and knead a resin composition and extrusion-mold the resin composition into a strand shape; and

a cooling/solidifying unit configured to cool and solidify the extrusion-molded resin composition having the strand shape,

wherein the cooling/solidifying unit is a roll unit that includes a groove having a curvature and internally includes a coolant flow path, and

wherein both of a coolant inlet and a coolant outlet of the coolant flow path are provided at the same end side of the roll unit.

<2> The strand producing apparatus according to <1>,
wherein the roll unit includes a rotating mechanism.
<3> The strand producing apparatus according to <1>,
wherein the coolant flow path of the roll unit has a turnaround structure at the other end side opposite to the coolant inlet and the coolant outlet.
<4> The strand producing apparatus according to any one of <1> to <3>,
wherein the roll unit includes a temperature controlling mechanism.
<5> The strand producing apparatus according to any one of <1> to <4>,
wherein the roll unit includes a water content controlling mechanism.
<6> The strand producing apparatus according to any one of <1> to <5>, including two of the roll unit,
wherein the two roll units are joined with each other to form a circular slit intended for letting a strand pass through.
<7> A method for producing a strand, the method including:

an extrusion-molding step of melting and kneading a resin composition and extrusion-molding the resin composition into a strand shape; and
a cooling/solidifying step of cooling and solidifying the extrusion-molded resin composition having the strand shape,
wherein the cooling/solidifying step is performed using a cooling/solidifying unit, which is a roll unit that includes a groove having a curvature and internally includes a coolant flow path, both of a coolant inlet and a coolant outlet of the coolant flow path being provided at the same end side of the roll unit.

<8> The method according to <7>,
wherein a coolant used in the roll unit is a supercritical fluid.
<9> The method according to <8>,
wherein the supercritical fluid is supercritical carbon dioxide.
<10> The method according to <8> or <9>,
wherein the resin composition contains a water-soluble resin.

<11> The method according to <10>,
wherein the water-soluble resin is at least one selected from the group consisting of polyethylene oxide, polyvinyl alcohol, polyacrylic acid, polyethylene-acrylic acid, polysarcosine, poly N-vinyl pyrrolidone, and polyvinyl acetate.
<12> The method according to any one of <7> to <11>,
wherein the method produces the strand having a water content of less than 2,000 ppm by mass.
<13> The method according to any one of <7> to <12>,
wherein the method produces the strand of which horizontal diameter and vertical diameter have coefficients of variation of 2.0% or lower.
<14> The method according to any one of <7> to <13>,
wherein the method produces the strand of which horizontal diameter and vertical diameter have ranges of fluctuation of 0.5 mm or less.
<15> The method according to any one of <7> to <14>,
wherein the method produces the strand having an average horizontal diameter and an average vertical diameter of 1 mm or greater but 5 mm or less.
<16> The method according to any one of <7> to <15>,
wherein the strand is for producing a three-dimensional object.
<17> The method according to any one of <7> to <16>,
wherein the strand is for supporting a three-dimensional object for production of the three-dimensional object.

The strand producing apparatus according to any one of <1> to <6> and the method for producing a strand according to any one of <7> to <17> can solve the various problems in the related art and can achieve the object of the present invention.

Description of the Reference Numeral

100: strand producing apparatus
101: extruder
102: cooling/solidifying unit
103: collecting device
104: wind-up device
105: roll unit
201: coolant inlet
202: coolant outlet
203: groove
204: thermocouple
205: circular slit

**Claims**

1.  A strand producing apparatus comprising:

    an extrusion-molding unit configured to melt and knead a resin composition and extrusion-mold the resin composition into a strand shape; and
    a cooling/solidifying unit configured to cool and solidify the extrusion-molded resin composition having the strand shape,

    wherein the cooling/solidifying unit is a roll unit that comprises a groove having a curvature and internally comprises a coolant flow path, and
    wherein both of a coolant inlet and a coolant outlet of the coolant flow path are provided at a same end side of the roll unit.

2.  The strand producing apparatus according to claim 1,
    wherein the roll unit comprises a rotating mechanism.

3.  The strand producing apparatus according to claim 1,

wherein the coolant flow path of the roll unit comprises a turnaround structure at another end side opposite to the coolant inlet and the coolant outlet.

4. The strand producing apparatus according to any one of claims 1 to 3,
wherein the roll unit comprises a temperature controlling mechanism.

5. The strand producing apparatus according to any one of claims 1 to 4,
wherein the roll unit comprises a water content controlling mechanism.

6. The strand producing apparatus according to any one of claims 1 to 5, comprising two of the roll unit,
wherein the two roll units are joined with each other to form a circular slit intended for letting a strand pass through.

7. A method for producing a strand, the method comprising:

melting and kneading a resin composition and extrusion-molding the resin composition into a strand shape; and cooling and solidifying the extrusion-molded resin composition having the strand shape, wherein the cooling and solidifying is performed using a cooling/solidifying unit, which is a roll unit that comprises a groove having a curvature and internally comprises a coolant flow path, both of a coolant inlet and a coolant outlet of the coolant flow path being provided at a same end side of the roll unit.

8. The method according to claim 7,
wherein a coolant used in the roll unit comprises a supercritical fluid.

9. The method according to claim 7 or 8,
wherein the resin composition comprises a water-soluble resin.

10. The method according to any one of claims 7 to 9,
wherein the method produces the strand having a water content of less than 2,000 ppm by mass.

11. The method according to any one of claims 7 to 10,
wherein the method produces the strand of which horizontal diameter and vertical diameter have coefficients of variation of 2.0% or lower.

12. The method according to any one of claims 7 to 11,
wherein the method produces the strand of which horizontal diameter and vertical diameter have ranges of fluctuation of 0.5 mm or less.

13. The method according to any one of claims 7 to 12,
wherein the method produces the strand having an average horizontal diameter and an average vertical diameter of 1 mm or greater but 5 mm or less.

14. The method according to any one of claims 7 to 13,
wherein the strand is for producing a three-dimensional object.

15. The method according to any one of claims 7 to 14,
wherein the strand is for supporting a three-dimensional object for production of the three-dimensional object.

# FIG. 1

# FIG. 2

# FIG. 3

# FIG. 4

# FIG. 5

204

201

202

# FIG. 6

# FIG. 7

# FIG. 8

# FIG. 9A

50

A

A

# FIG. 9B

50

51

# FIG. 9C

# FIG. 10

# FIG. 11

# FIG. 12

## INTERNATIONAL SEARCH REPORT

| International application No. |
|---|
| PCT/JP2016/086955 |

A.   CLASSIFICATION OF SUBJECT MATTER
*B29B9/06*(2006.01)i, *B29B13/04*(2006.01)i, *B29C47/88*(2006.01)i, *B29C64/314*(2017.01)i, *B33Y70/00*(2015.01)i

According to International Patent Classification (IPC) or to both national classification and IPC

B.   FIELDS SEARCHED

Minimum documentation searched (classification system followed by classification symbols)
B29B9/06, B29B13/04, B29C47/88, B29C67/00, B33Y70/00

Documentation searched other than minimum documentation to the extent that such documents are included in the fields searched
Jitsuyo Shinan Koho          1922-1996   Jitsuyo Shinan Toroku Koho    1996-2017
Kokai Jitsuyo Shinan Koho    1971-2017   Toroku Jitsuyo Shinan Koho    1994-2017

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | JP 07-117047 A  (Mitsui Toatsu Chemicals, Inc.),<br>09 May 1995 (09.05.1995),<br>paragraphs [0007] to [0033]; fig. 1 to 2<br>(Family: none) | 1-4,7,11-13<br>5,8-10,14-15 |
| Y | JP 07-080831 A  (Mitsubishi Kasei engineerng Kabushiki Kaisha),<br>28 March 1995 (28.03.1995),<br>paragraph [0024]<br>(Family: none) | 5,10 |
| Y | JP 2007-278606 A  (Valeo Thermal Systems Japan Corp.),<br>25 October 2007 (25.10.2007),<br>paragraphs [0001] to [0003]<br>(Family: none) | 8 |

[X]   Further documents are listed in the continuation of Box C.          [ ]   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 January 2017 (06.01.17) | 24 January 2017 (24.01.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

International application No.

PCT/JP2016/086955

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2015/182681 A1  (The Nippon Synthetic Chemical Industry Co., Ltd.), 03 December 2015 (03.12.2015), paragraphs [0005], [0108] to [0111] (Family: none) | 9,14-15 |
| A | JP 2006-159849 A  (Tokki Ltd.), 22 June 2006 (22.06.2006), entire text; all drawings (Family: none) | 1-15 |
| A | WO 2012/008006 A1  (Mitsubishi Engineering-Plastics Corp.), 19 January 2012 (19.01.2012), entire text; all drawings & CN 102869482 A          & KR 10-2013-0018867 A | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 11129245 A